# EUROPEAN PATENT APPLICATION

(11) **EP 1 339 048 A2**
(43) Date of publication of application: **27.08.2003**
(21) Application number: 02258466.8
(22) Date of filing: 09.12.2002
(51) Int. Cl.: G11B 7/0045

(54) **Method and apparatus for recording data on optical recording medium**

(30) Priority: 25.02.2002 KR 2002009999
(71) Applicant: SAMSUNG ELECTRONICS CO., LTD., Suwon-City, Kyungki-do (KR)
(72) Inventor: Ahn, Yong Jin, Seocho-gu, Seoul (KR); Park, In-sik, Paldal-gu, Suwon-si, Gyeonggi-do (KR); Lee, Kyung-geun, Bandang-gu, Seongnam-si, Gyeonggi-do (KR); Yang, Chang-jin, Paldal-gu, Suwon-si, Gyeonggi-do (KR); Otsuka, Tatsuhiro, Paldal-gu, Suwon-si, Gyeonggi-do (KR); Yoon, Du-seop, Gwonseon-gu, Suwon-si, Gyeonggi-do (KR); Kim, Seong-sue, Seongdong-gu, Seoul (KR); Ko, Jung-wan 315-401 Daewoo Apt. 956-1 Cheongmyung, Suwon-si, Gyeonggi-do 442-470 (KR)
(74) Representative: Brandon, Paul Laurence

(57) **Abstract**

A method and apparatus for recording data on an optical recording medium (200) are provided. In the method of recording data on the optical recording medium, a mark or a space is formed using a recording waveform having an erase pattern including a predetermined pulse whose high level is higher than an erase power level and whose low level is lower than the erase power level. Thus, the shape of the mark can be prevented from being distorted and be improved, which results in an improvement in the recording/reproducing characteristics.

## Description

The present invention relates to methods and apparatus for recording data on an optical recording medium, and more particularly, though not exclusively, to a method and apparatus for recording digital data by forming a mark on an optical disc.

When recording data on an optical recording medium such as an optical disc, a mark is formed in a track formed in the optical disc. A mark is formed as a pit of a read only disc such as a CD-ROM, a DVD-ROM and the like. A mark is formed on a recordable disc such as CD-R/RW, DVD-R/RW//RAM and the like when a phase change occurs in a phase change layer, which is changed to be crystalline or amorphous depending on the temperature and coats a recording layer.

Data recording methods include a mark edge recording method and mark position recording method in view of signal detection. In the mark position recording method, the amplitude of a detected radio frequency (RF) signal is changed from positive/negative to negative/positive in a position where a mark is recorded. In the mark edge recording method, the amplitude of a detected RF signal is changed from positive/negative to negative/positive at the edges of a mark. Thus, it is important to accurately record the edges of the mark to improve the quality of a reproduced signal.

However, by observing the trailing edge of a mark recorded on a disc coated with a phase change layer according to a conventional recording method, it can be seen that the shape of the mark depends on the length of the mark or the distance between marks, i.e., the length of a space. In other words, the trailing edge is wider than the leading edge of the mark, which degrades the recording/reproducing characteristics. The relatively long length of the mark further degrades recording/reproducing characteristics due to thermal accumulation.

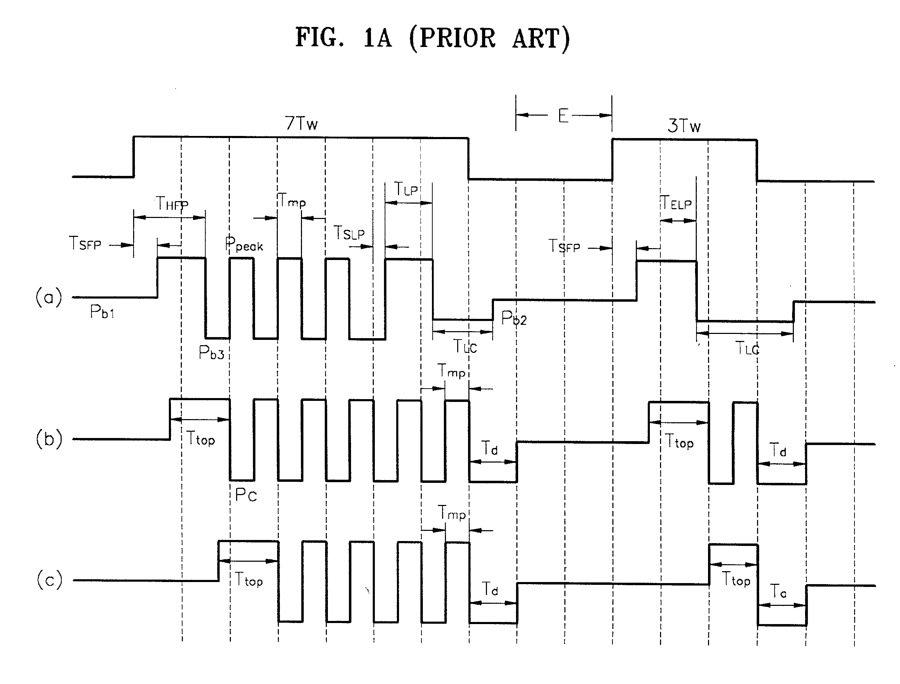

Figure 1A shows recording waveforms according to a conventional recording method. Referring to Figure 1A, there are various recording waveforms for recording Non Return to Zero Inverted (NRZI) data. A first recording waveform (a) is for DVD-RAM. Recording waveforms (b) and (c) are for DVD-RW. T represents a cycle of a reference clock signal. According to mark edge recording, the high level of NRZI data is recorded using marks and the low level of NRZI data is recorded using spaces. A recording waveform used for recording the mark is called "a recording pattern", and a recording waveform used for forming the space (erasing the mark) is called "an erase pattern". Conventional recording waveforms (a), (b), and (c) are each made of multiple pulses. The power level of each pulse is controlled to have one of four levels: Ppeak, P_{b1}, P_{b2}, and P_{b3}. As shown in section E, the power of the erase pattern is maintained to be a uniform predetermined DC level.

Since the erase pattern included in the conventional recording waveform is maintained at a uniform DC level for a predetermined time, heat of about 0 - 200°C is continuously applied to a corresponding area. Thus, if the mark is recorded a plurality of times, the mark is degraded and the shape thereof is distorted. As a result, the recording/reproducing characteristics are remarkably degraded. In particular, the cycle T of the reference clock signal is reduced as the recording density and linear velocity for recording a large amount of data on a disc increase. As a result, recording/reproducing characteristics are much more degraded when thermal interference between pulses constituting a recording waveform is increased.

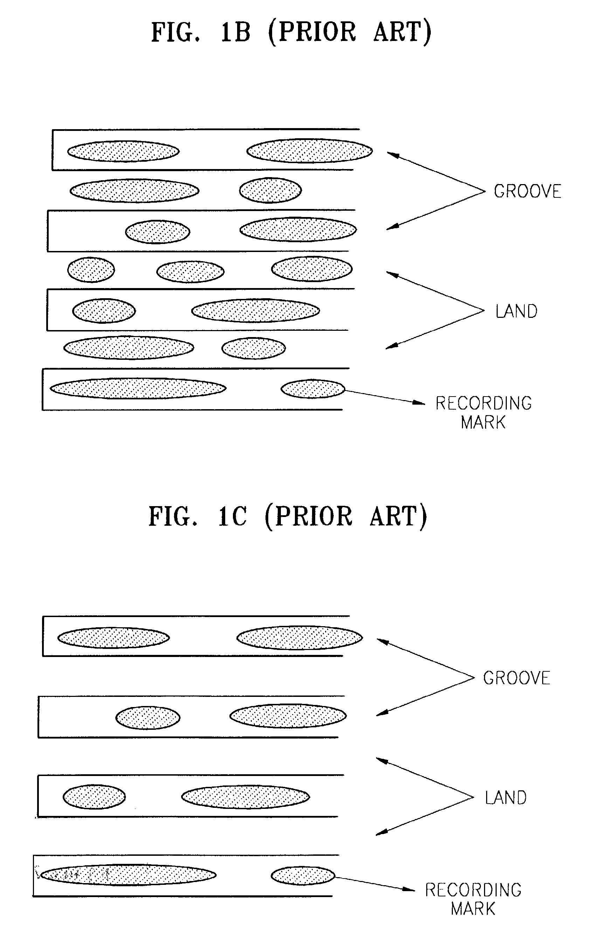

Figures 1B and 1C show the shapes of marks formed on an optical recording medium. Referring to Figures 1B and 1C, a track of the optical recording medium is composed of a groove and a land. To record predetermined data on the optical recording medium, marks are formed on or erased from the groove and the land. However, a laser beam applies heat to the optical recording medium to form or erase the marks. This heat may cause a Thermal Crossing phenomenon in which adjacent tracks or adjacent marks are affected. Figure 1B illustrates a method of recording predetermined data by forming marks on both the groove and the land where the Thermal Crossing phenomenon easily occurs. Figure 1C illustrates a method of forming marks only on the groove, which is currently used for most optical recording media since the Thermal Cross phenomenon hardly occurs. However, in the method shown in FIGURE 1C, previously-formed marks may also be affected by applying too much heat when forming predetermined marks.

Different recording waveforms are used for different kinds of discs, i.e., DVD-RAM, DVD-RW, and the like. This is because the characteristics of recording layers are different from each other. The use of different recording waveforms for different discs becomes a problem when manufacturing drives for recording data on all kinds of discs. This is because drives that can read all kinds of discs should realize various recording waveforms, which increases costs.

It is an aim of preferred embodiments of the present invention to provide a method and apparatus for recording data using a recording waveform which is capable of preventing leading and trailing edges of a mark from being distorted and preventing degradation caused by repeated recording.

It is a second aim of preferred embodiments of the present invention to provide a method and apparatus for recording data using a recording waveform having an erase pattern which is capable of improving the shape of a mark.

It is a third aim of preferred embodiments of the present invention to provide a method and apparatus for recording data using a recording waveform which is adaptable to a disc having a recording layer of various characteristics.

It is a fourth aim of preferred embodiments of the present invention to provide a method and apparatus for generating erase pulses based on information about the power level of the erase pulses.

It is a fifth aim of preferred embodiments of the present invention to provide a method and apparatus for controlling the power level of predetermined erase pulses to uniformly erase a recording mark.

According to the present invention in a first aspect, there is provided a method of recording data on an optical recording medium, the method comprising: generating a recording waveform having an erase pattern including a predetermined pulse having a high level which is higher than an erase power level and having a low level which is lower than the erase power level.

Suitably, the mark and the space are recorded according to a run length limited scheme (2, 10). It is preferable that the mark is recorded using a first level of predetermined NRZI and the space is recorded using a second level of the predetermined NRZI data.

According to the present invention in a second aspect, there is provided a method of recording data on a recording medium, the method comprising: (a) generating digital data whose channel is modulated; (b) generating a recording waveform having an erase pattern including a predetermined pulse having a high level which is higher than an erase power level and having a low level which is lower than the erase power level; and (c) forming marks according to a first level data of the digital data and spaces are formed according to a second level data of the digital data using the generated recording waveform on the level information.

Suitably, step (a) further comprises reading level information of an erase pulse recorded on the optical recording medium; and in step (b) the erase pattern included in the generated recording waveform is formed by an erase pulse generated based on the level information. Suitably, in step (a) the level information of the erase pulse is input from a user.

Suitably, step (a) comprises:
(a1) generating digital data whose channel is modulated;
(a2) reading the level information of the erase pulse recorded on the optical recording medium;
(a3) performing recording and erasing tests to obtain predetermined test data in a test area of the optical recording medium at predetermined value intervals within a predetermined range based on the level information; and
(a4) selecting optimum conditions of the test conditions based on the results of the tests, and in step (b), forming an erase pattern included in the recording waveform by using the erase pulse generated based on level information selected using the optimum conditions.

Suitably, steps (a), (b), and (c) are performed based on a (2, 10) run length limited scheme.

Suitably, steps (a), (b), and (c) are performed based on a (1,7) run length limited scheme.

Suitably, the power level of a first pulse of the erase pattern is a low level of the erase pattern and the power level of a last pulse of the erase pattern is a high level.

Suitably, the power level of a first pulse of the erase pattern is a low level of the erase pattern and the power level of a last pulse of the erase pattern is a high level.

Suitably, the power level of a first pulse of the erase pattern is a high level of the erase pattern and the power level of a last pulse of the erase pattern is a high level.

Suitably, the power level of a first pulse of the erase pattern is a high level of the erase pattern and the power level of a last pulse of the erase pattern is a high level.

Suitably, the power level of a first pulse of the erase pattern is a low level of the erase pattern and the power level of a last pulse of the erase pattern is a low level.

Suitably, the power level of a first pulse of the erase pattern is a low level of the erase pattern and the power level of a last pulse of the erase pattern is a low level.

Suitably, the power level of a first pulse of the erase pattern is a high level of the erase pattern and the power level of a last pulse of the erase pattern is a low level.

Suitably, the power level of a first pulse of the erase pattern is a high level of the erase pattern and the power level of a last pulse of the erase pattern is a low level.

Suitably, a ratio of the time for which a high level of a multi-pulse lasts to the time for which a low level of the multi-pulse lass is 1:1.

Suitably, a ratio of the time for which a high level of a multi-pulse lasts to the time for which a low level of the multi-pulse lass is 1:1.

Suitably, the time for which the high level lasts is 1/2 of a clock cycle.

Suitably, a ratio of the time for which the high level of the multi-pulse lasts to the time for which the low level of the multi-pulse lasts is m:n.

Suitably, a ratio of the time for which the high level of the multi-pulse lasts to the time for which the low level of the multi-pulse lasts is m:n.

Suitably, in step (a), a mark is formed using a first level of predetermined NRZI data and in step (b), and a space is formed using a second level of the NRZI data.

Suitably, in step (a), a mark is formed using a first level of predetermined NRZI data and in step (b), and a space is formed using a second level of the NRZI data.

Suitably, a recording waveform comprises cooling pulses and the erase pattern comprises a portion of the cooling pulses.

Suitably, if an ending point of the cooling pulse is smaller or greater than 0.5T from a trailing edge of the NRZI signal, the time for which the first pulse constituting the erase pattern lasts is increased to more than 0.5T.

Suitably, a unit pulse constituting the erase pattern has a high level and a low level which are controlled according to the time for which the first pulse constituting the recording waveform lasts.

Suitably, the recording pattern comprises a multi-pulse.

Suitably, the recording pattern comprises a multi-pulse.

Suitably, the recording pattern has at least two power levels.

According to the present invention in a third aspect there is provided an apparatus for recording data on an optical recording medium, the apparatus comprising:
a recording waveform generator for generating a recording waveform having an erase pattern including a multi-pulse; and
a pickup unit for radiating light onto the optical recording medium according to the generated recording waveform to form a mark or a space.

Suitably, a power information management unit for reading pulse level information of the erase pattern recorded on the optical recording medium and providing it to the recording waveform generator,
wherein the recording waveform generator generates the recording waveform having the erase pattern including the multi-pulse based on the level information of the erase pattern.

Suitably, the power information management unit receives the pulse level information of the erase pattern from a user and provides it to the recording waveform generator.

Suitably, the power information management unit performs recording and erasing testes for predetermined test data in a test area of the optical recording medium at predetermined value intervals within a predetermined range based on the level information of the erase pulse and selects optimum conditions of the test conditions based on the results of the tests, and provides the conditions to the recording waveform generator.

Suitably, the apparatus further comprises a channel modulator for modulating a channel of data provided from the outside to generate NRZI data and outputting NRZI data to the recording waveform generator.

Suitably, the pickup unit comprises:
a motor for rotating the optical recording medium;
an optical head for radiating light onto the optical recording medium or receiving laser light reflected from the optical recording medium;
a servo circuit for servo-controlling the motor and the optical head; and
a laser driver for driving a laser installed on the optical head.

The present invention will become more apparent by describing in detail preferred embodiments thereof, by way of example only, with reference to the attached drawings in which:
Figure 1A is a view of recording waveforms according to a conventional method;
Figures 1B and 1C are views of shapes of marks formed on an optical recording medium;
Figures 2A and 2B are block diagrams of recording apparatuses according to preferred embodiments of the present invention;
Figures 3A and 3B are examples realized by the recording apparatus shown in FIGS. 2A and 2B, respectively;
Figures 4A through 4C are examples of recording waveforms generated by a recording waveform generator 2;
Figure 5 is another example of a recording waveform generated by the recording waveform generator 2;
Figure 6 is a view of waveforms explaining four types of erase patterns according to a preferred embodiment of the present invention;
Figure 7 is a view of more examples of (a) LH shown in Figure 6;
Figures 8 through 10 are views of shapes of marks recorded through simulation;
Figures 11 through 15 are graphs illustrating the characteristics of DVD-RAM;
Figures 16 through 20 are graphs illustrating the characteristics of DVD-RW;
Figures 21A and 2B are graphs illustrating nucleation and crystal growth rate according to temperatures of a AgInSbTe recording layer and a GeSbTe recording layer, respectively; and
Figures 22A and 22B are flowcharts illustrating recording methods according to preferred embodiments of the present invention.

Hereinafter, preferred embodiments of the present invention will be described in detail with reference to the attached drawings.

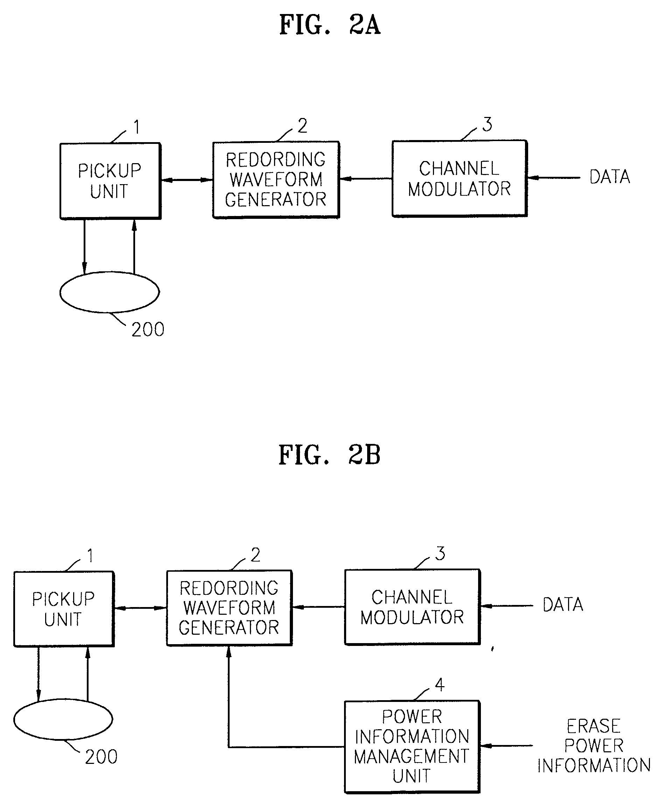

Figures 2A and 2B are block diagrams of recording apparatus according to preferred embodiments of the present invention. Referring to Figure 2A, the recording apparatus, which forms a mark or space to record data on an optical recording medium 200, includes a pickup unit 1, a recording waveform generator 2, and a channel modulator 3.

The channel modulator 3 modulates input data to a channel bit sequence. The recording waveform generator 2 is supplied with information about the channel bit sequence and erase powers P_{b1} and P_{b2} and generates a recording waveform for recording the channel bit sequence. The generated recording waveform includes an erase pattern having erase mulit-pulses. The recording waveform will be described in detail later. The pickup unit 1 radiates light onto the optical recording medium 200 according to the generated recording waveform to form a mark or a space.

Referring to Figure 2B, the recording apparatus, which forms a mark or a space to record data on the optical recording medium 200, includes a pickup unit 1, a recording waveform generator 2, a channel modulator 3, and a power information management unit 4.

The channel modulator 3 modulates input data to a channel bit sequence. The power information management unit 4 reads information about erase powers P_{b1} and P_{b2} from the optical recording medium 200 or receives the information from the outside.

The recording waveform generator 2 is supplied with information about the channel bit sequence and the erase powers P_{b1} and P_{b2} and generates a recording waveform for recording the channel bit sequence based on information about the erase powers P_{b1} and P_{b2}. The generated recording waveform includes an erase pattern having erase multi-pulses. The recording waveform will be described in detail later. The pickup unit 1 radiates light onto the optical recording medium 200 according to the generated recording waveform to form a mark or a space.

The power information management unit 4 first performs tests for recording and erasing predetermined test data (random data or predetermined data) in a test area of the optical recording medium 200 at predetermined value intervals (e.g., a value of 3 - 4 % of a level value) within a predetermined range (e.g., a range of ±20%) based on information about the erase powers P_{b1} and P_{b2}. Next, the power information management unit 4 selects optimum conditions among the test conditions (e.g., conditions in which a jitter value is minimum, the resolution is the highest, the degree of modulation is maximum, and the like) based on the test results, and provides the optimum conditions to the recording waveform generator 2.

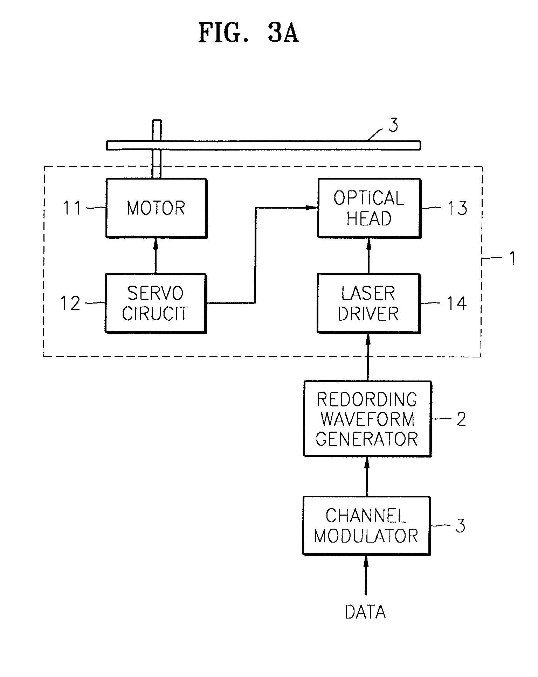

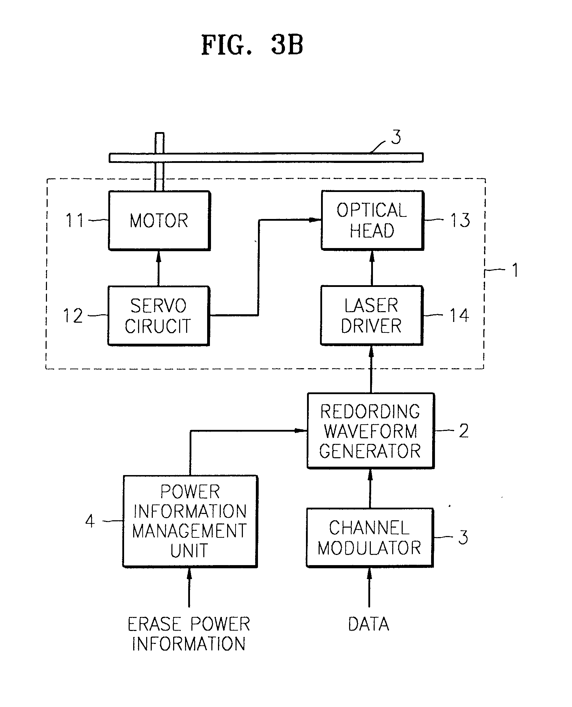

Figures 3A and 3B are examples realized by the recording apparatus shown in Figures 2A and 2B, respectively. Elements that are the same as those in Figures 2A and 2B are described with the same numerals, and thus their detailed descriptions are omitted.

Referring to Figure 3A, the recording apparatus includes a pickup unit 1, a recording waveform generator 2, and a channel modulator 3. The pickup unit 1 has a motor 11, a servo circuit 12, an optical head 13, and a laser driver 14. The motor 11 rotates an optical disc 200. The servo circuit 12 servo-controls the motor 11 and the optical head 13. The optical head 13 radiates laser light onto the optical disc 200 and receives laser light reflected from the optical disc 200. The laser driver 14 drives a laser (not shown) installed on the optical head 13.

The channel modulator 3 modulates input data to a channel bit sequence and outputs Non Return to Zero Inverted (NRZI) data. The recording waveform generator 2 generates a recording waveform for recording NRZI data based on information about erase powers P_{b1} and P_{b2} and provides it to the laser driver 14 in the pickup unit 1.

The laser driver 14 controls the laser using the received recording waveform to form a mark or a space on the optical recording medium 200.

Referring to Figure 3B, the recording apparatus includes a pickup unit 1, a recording waveform generator 2, a channel modulator 3, and a power information management unit 4. The pickup unit 1 includes a motor 11, a servo circuit 12, an optical head 13, and a laser driver 14. The motor 11 rotates an optical recording medium 200. The servo circuit 12 servo-controls the motor 11 and the optical head 13. The optical head 13 radiates laser light onto the optical disc 200 and receives laser light reflected from the optical disc 200. The laser driver 14 drives a laser (not shown) installed on the optical head 13.

The channel modulator 3 modulates input data to a channel bit sequence and outputs NRZI data. The power information management unit 4 reads information about erase powers P_{b1} and P_{b2} recorded on the optical recording medium or receives the information from the outside. The recording waveform generator 2 generates a recording waveform for recording NRZI data based on the information about the erase powers P_{b1} and P_{b2} and provides it to the laser driver 14 in the pickup unit 1.

The laser driver 14 controls the laser using the received recording waveform to form a mark or a space on the optical disc 200.

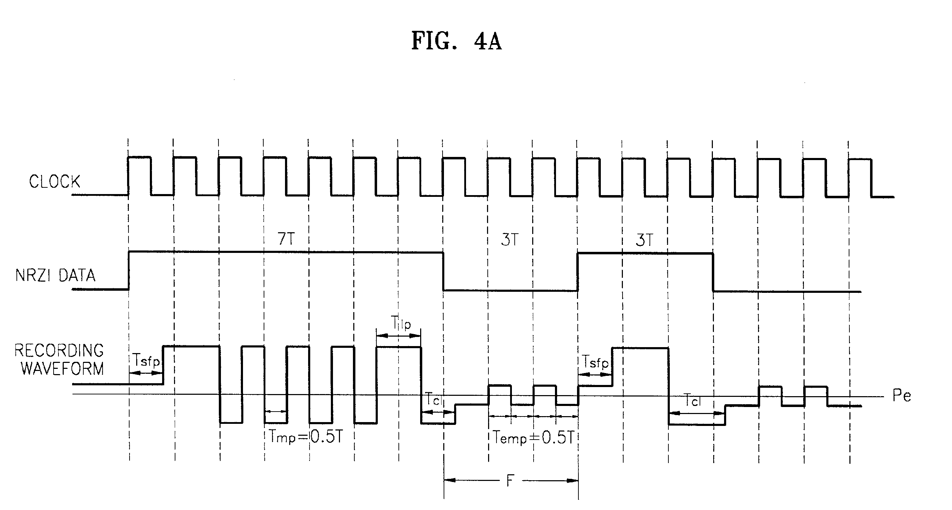

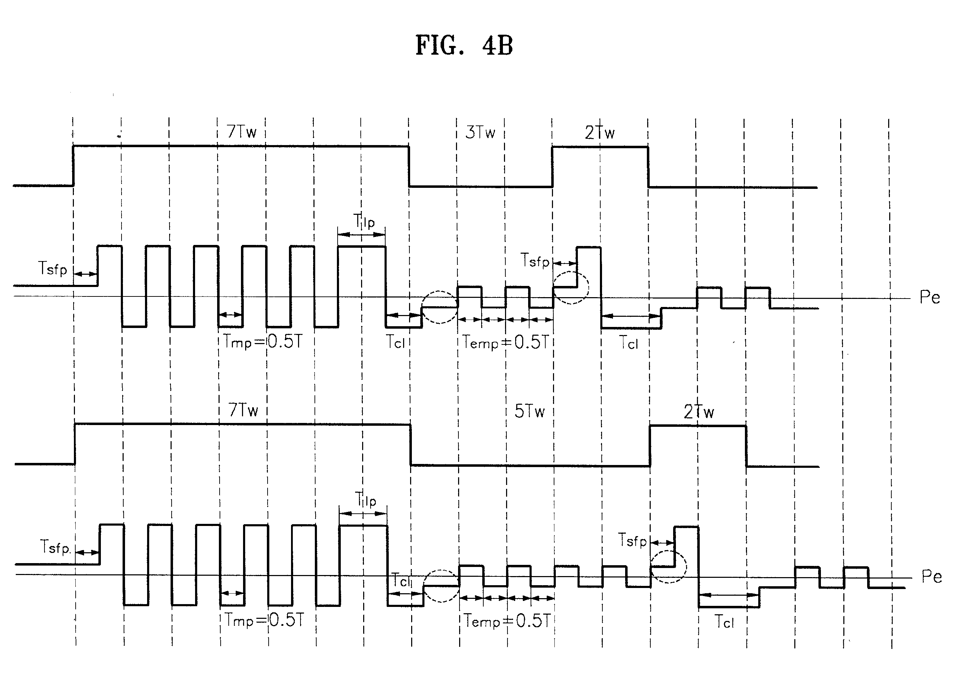

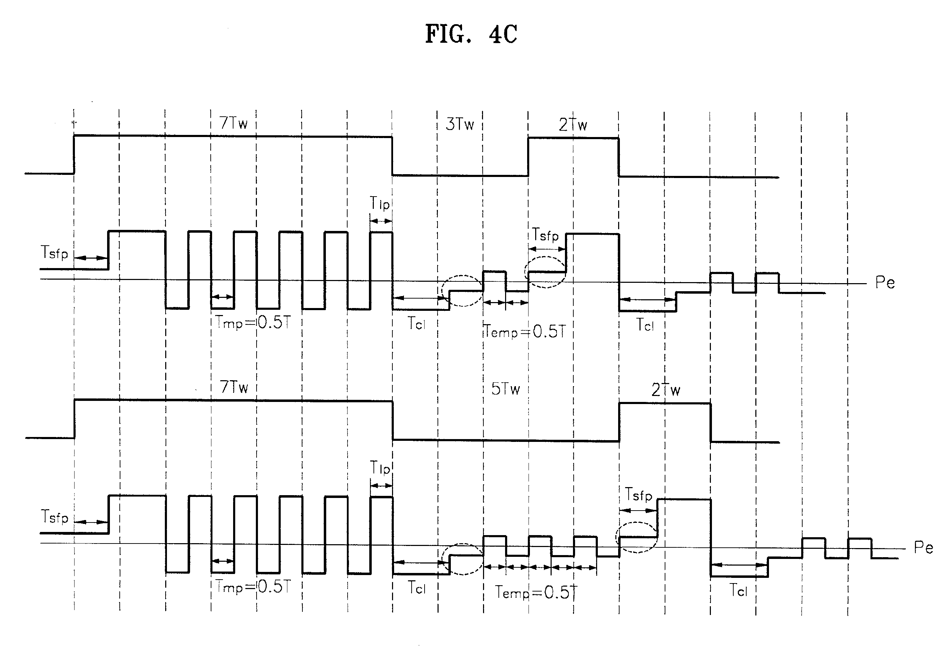

Figures 4A through 4C are examples of recording waveforms generated by the recording waveform generator 2. In Figure 4A, N-2 pulses are necessary for recording a mark for arbitrary N periods of a reference clock signal of integers 2 - 14, and N-1 pulses are necessary for generating a space for erasing the existing mark for the arbitrary N periods of the reference clock signal. In Figure 4B, N-1 pulses are necessary for recording the mark for arbitrary N periods T of a reference clock signal of integers 2 - 14, and N-1 pulses are necessary for generating a space for erasing the existing mark for the arbitrary N periods of the reference clock signal so that the end position of a first one of recording pulses corresponds to the end portion of a first clock pulse. In Figure 4C, N-1 pulses are necessary for recording a mark for arbitrary N periods T of a reference clock signal of integers 2 - 14, and N-2 pulses are necessary for generating a space for erasing the existing mark for arbitrary N periods of the reference clock signal so that the end position of a first one of recording pulses corresponds to the end portion of a second clock pulse and the last one of the recording pulses corresponds to the end portion of NRZI.

Referring to Figure 4A, NRZI data varies depending on the modulation method of the channel modulator 3. In other words, in a case where NRZI data is modulated to Run Length Limited (RLL) (2, 10) data, i.e., the minimum length of a mark is 3T and the maximum length of the mark is 11T according to Eight to fourteen Modulation (EFM), Eight to fourteen Modulation plus (EFM+), D(8-15), and Dual modulation (?). Here, D(8-15) is a modulation method published in "Optical Disc Recording System of 25GB Capacity" by Massida in Optical Data Storage (ODS), 2001. Dual modulation is disclosed in Korea Patent Application No. 99-42032, titled "Method Of Arranging RLL Code Having Improved DC Restraint Capability, Modulation and Demodulation Method, and Demodulation Apparatus", which was filed on 30 September, 1999 and published on 25 November, 2000, by the applicant of the present invention. The minimum recording mark is 2T and the maximum recording mark is 8T when using RLL(1,7).

When forming a high level of NRZI data with a mark and a low level with a space, the recording waveform includes a recording pattern for recording a mark having a length of 7T, an erase pattern for forming a space having a length of 3T, and a recording pattern for recording a mark having a length of 3T.

The recording pattern is composed of a pulse sequence. The erase pattern is also composed of a pulse sequence as shown in section F. Tmp represents a width of multi-pulses constituting the recording pattern. Here, the multi-pulses represent at least one pulse whose width and power strength are identical. In this embodiment, Tmp is 0.5T. Tlp represents a width of the last pulse constituting the recording pattern. Tcl represents the time for which a cooling pulse lasts. The cooling pulse ranges over the recording pattern and the erase pattern. Temp represents a width of an erase multi-pulse constituting the erase pattern. In this embodiment, Temp is 0.5T. Tsfp represents the time from a point when NRZI data is switched from low level to high level to a point when a first pulse constituting the recording pattern starts. Tsfp affects the power level of the erase pattern. In other words, as shown, if Tsfp is greater than 0.5T, the multi-pulse included in the erase pattern is ended at the low level P_{b1} and subsequent Tsfp starts at the high level P_{b2} of the multi-pulse. In contrast, if Tsfp is smaller than 0.5T, the multi-pulse included in the erase pattern is ended at a low level P_{b1} and subsequent Tsfp maintains the low level P_{b1} of the multi-pulse.

Referring to Figure 4B, two recording pattern examples are shown: when forming a high level of NRZI data with a mark and a low level with a space, the recording waveform includes a recording pattern for recording a mark having a length of 7T, an erase pattern for forming a space having a length of 3T, and a recording pattern for recording a mark having a length of 2T; and when forming a high level of NRZI with a mark and a low level with a space, the recording waveform includes a recording pattern for recording a mark having a length of 7T, an erase pattern for forming a space having a length of 5T, and a recording pattern for recording a mark having a length of 2T. The number of pulses in the recording mark section is 1 more than the number of pulses shown in FIGURE 4A.

Referring to Figure 4C, two recording pattern examples are shown: when forming a high level of NRZI data with a mark and a low level with a space, the recording waveform includes a recording pattern for recording a mark having a length of 7T, an erase pattern for forming a space having a length of 3T, and a recording pattern for recording a mark having a length of 2T; and when forming a high level of NRZI data with a mark and a low level with a space, the recording waveform includes a recording pattern for recording a mark having a length of 7T, an erase pattern for forming a space having a length of 5T, and a recording pattern for recording a mark having a length of 2T. The number of pulses is 1 more than the number of pulses shown in Figure 4A in the recording mark section, but 1 less than the number of pulses shown in FIGURE 4A in the space mark section.

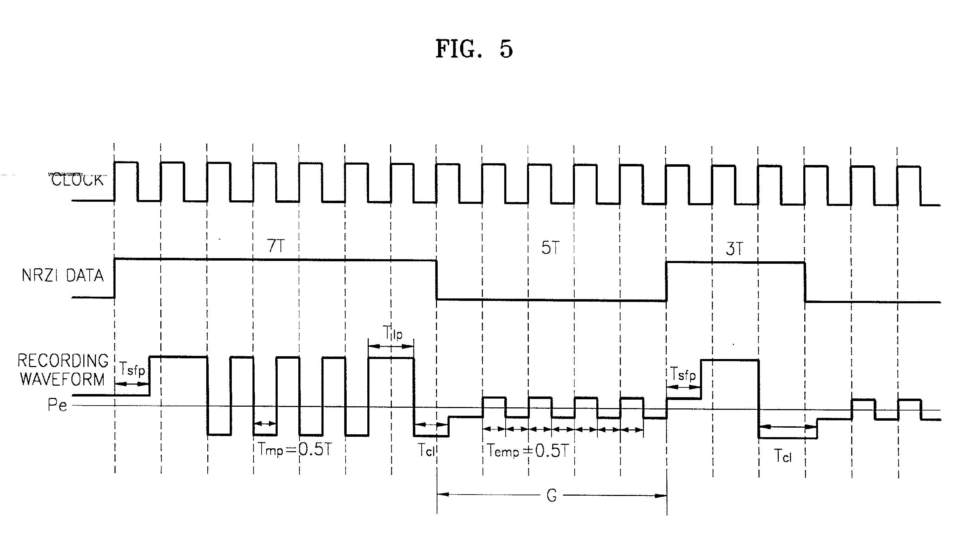

Figure 5 shows another recording waveform generated by the recording waveform generator 2. Referring to Figure 5, when forming a high level of NRZI data with a mark and a low level with a space, the recording waveform includes a recording pattern for recording a mark having a length of 7T, an erase pattern for forming a space having a length of 5T, and a recording pattern for recording a mark having a length of 3T.

The recording pattern is composed of a pulse sequence. The erase pattern is also composed of a pulse sequence as shown in section G. Tmp represents a width of a multi-pulse constituting the recording pattern. The multi-pulse represents at least one pulse whose width and power strength are identical. In this embodiment, Tmp is 0.5T. Tlp represents a width of the last pulse constituting the recording pattern. Tcl represents the time for which a cooling pulse lasts. The cooling pulse ranges over the recording pattern and the erase pattern. Temp represents a width of an erase multi-pulse constituting the erase pattern. In this embodiment, Temp is 0.5T. Tsfp represents the time from a point when NRZI data is switched from low level to high level to a point when a first pulse constituting the recording pattern starts. Tsfp affects the power level of the erase pattern. In other words, as shown, if Tsfp is greater than 0.5T, the multi-pulse included in the erase pattern is ended at the low level P_{b1} and subsequent Tsfp starts at the high level P_{b2}. In contrast, if Tsfp is smaller than 0.5T, the multi-pulse included in the erase pattern is ended at the low level P_{b1} and subsequent Tsfp maintains the low level P_{b1} of the multi-pulse.

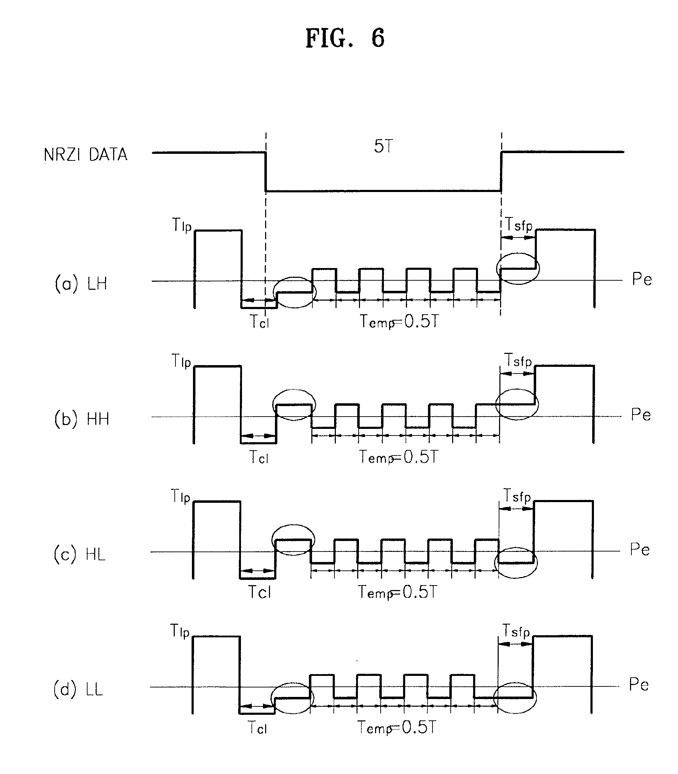

Figure 6 is a view of waveforms for explaining four types of erase patterns according to a preferred embodiment of the present invention. Referring to FIGURE 6, an erase pattern according to the present invention is classified into four types: (a) LH, (b) HH, (c) HL, and (d) LL. Each erase pattern is marked with a circle for easy identification of the differences. (a) LH represents that the power of a first pulse constituting the erase pattern is equal to the low level P_{b1} of a subsequent erase multi-pulse, the last erase multi-pulse constituting the erase pattern is ended at the low level P_{b1}, and power level of subsequent Tsfp is equal to the high level P_{b2} of the erase multi-pulse. (b) HH represents that the power of a first pulse constituting the erase pattern is equal to the high level P_{b2} of a subsequent erase multi-pulse, the last erase multi-pulse constituting the erase pattern is ended at the high level P_{b2}, and level of subsequent Tsfp is maintained at the high level P_{b2} of the erase multi-pulse. (c) HL represents that the power of a first pulse constituting the erase pattern is equal to the high level P_{b2} of a subsequent erase multi-pulse, the last erase multi-pulse constituting the erase pattern is ended at the high level P_{b2}, and the level of subsequent Tsfp is equal to the low level P_{b1} of the erase multi-pulse. Finally, (d) LL represents that power of a first pulse constituting the erase pattern is equal to low the level P_{b1} of a subsequent erase multi-pulse, the last erase multi-pulse constituting the erase pattern is ended at the low level P_{b1}, and level of subsequent Tsfp is maintained at the low level P_{b1} of the erase multi-pulse.

In examples of the recording waves shown in Figures 4A through 6, the level of Tcl of the last pulse of the recording waveform is equal to the high level of the recording pulse, but may have any intermediate level value of level values between the high level of the recording pulse and the high level of the erase pulse.

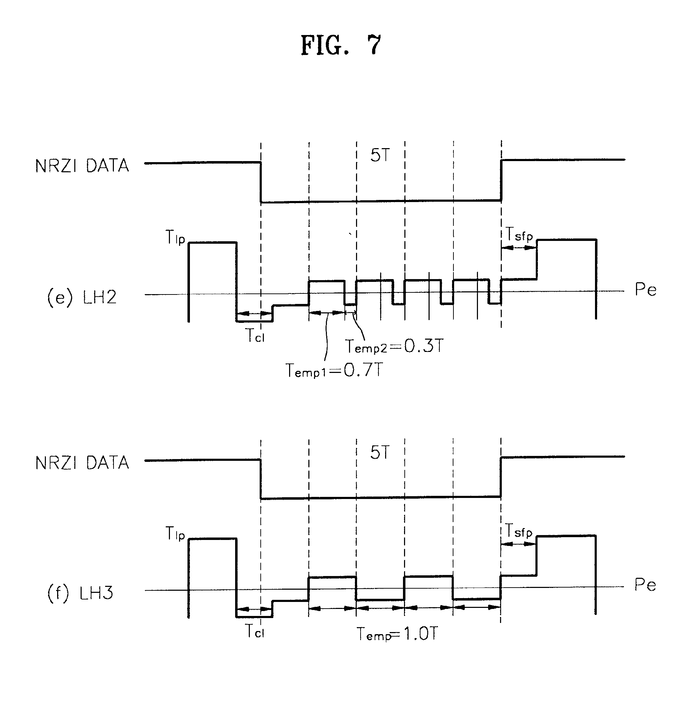

Figure 7 shows other examples of (a) LH shown in Figure 6. Referring to Figure 7, (e) LH2 is identical to (a) LH of FIGURE 6, except that the time Temp1, for which the high level P_{b2} of the erase multi-pulse constituting one period lasts, and the time Temp2, for which the low level P_{b1} lasts, are 0.7T and 0.3T, respectively. (f) LH3 is also identical to (a) LH of FIGURE 6 except that the time Temp, for which the high level P_{b2} lasts and for which the low level P_{b1} of an erase multi-pulse lasts, is 1.0T. Here, the ratio of the time Temp1, for which the high level P_{b2} of the erase multi-pulse constituting one period lasts, to the time Temp2 for which the low level P_{b1} lasts, is m:n (m and n are integers) . This value may vary.

The recording waveform according to the present invention has an erase pattern including an erase multi-pulse with high level and low level powers P_{b1} and P_{b2} so as to reduce distortion of the trailing edge of a mark and improve the reproduction characteristic of the mark. In particular, the recording waveforms described in previous embodiments are formed by controlling the times for which the high level P_{b1} and the low level P_{b2} of the erase multi-pulse last, i.e., the "lasting times", to be within a range of 0.25 - 0.75T of the clock period T to select a lasting time suitable for thermal characteristics of the disc 200. Thus, the recording waveforms greatly reduce distortion of the trailing edge of a mark and improve the reproduction characteristic of the mark.

Information about four types of erase patterns (information about type or erase pulse levels P_{b1} and P_{b2}) may be recorded in a lead-in region of a recordable disc or may be included as header information in a wobble signal. Thus, when recording data, the recording apparatus reads information about the type or level of the erase pulse from the lead-in region or the wobble signal to generate a corresponding recording waveform so as to form a mark and a space.

Four types of erase patterns may be used as sings for representing the speed factor of a disc or the kinds of marks when recording/reproducing data. For example, the signs can say information "A disc using an LH type erase pattern has a speed factor of 20".

To obtain optimized recording/reproducing conditions for four types of erase patterns, level values of the erase pulse are recorded in and reproduced from a predetermined test area of the disc within a predetermined range (e.g., a range of ±20) in each predetermined unit (e.g., a unit of 3 - 4% of the erase pulse level). A corresponding recording waveform is generated from these results to form a mark and a space. Here, there are several methods of determining optimized recording conditions: measuring jitter to select the conditions under which a jitter value becomes minimum; measuring bit error rate to select a condition where bit error rate becomes minimum; deducing a condition where resolution (a value obtained by diving an amplitude value of the shortest signal by an amplitude value of the longest signal) is maximum; measuring modulation (a value obtained by dividing a high level value of the longest signal by a low level value of the longest signal) to deduce a recording condition where modulation is maximum; and measuring asymmetry to deduce a recording condition within a predetermined standard. In the test method, a random pattern or a predetermined pattern may be used.

To ascertain effects of embodiments of the present invention, the shapes of marks recorded through simulation were observed. A structure used in the simulation is shown in table 1. A used disc has a four-layer structure.

**[Table 1]**

| | Substrate | Dielectric layer | Recording layer | Dielectric layer | Reflective layer |
|---|---|---|---|---|---|
| Materia 1 | PC | ZnS-SiO2 | Sb-Te eutectic | ZnS-SiO2 | Ag alloy |
| Thickne ss | 0.6mm | 128nm | 14nm | 16nm | 30nm |

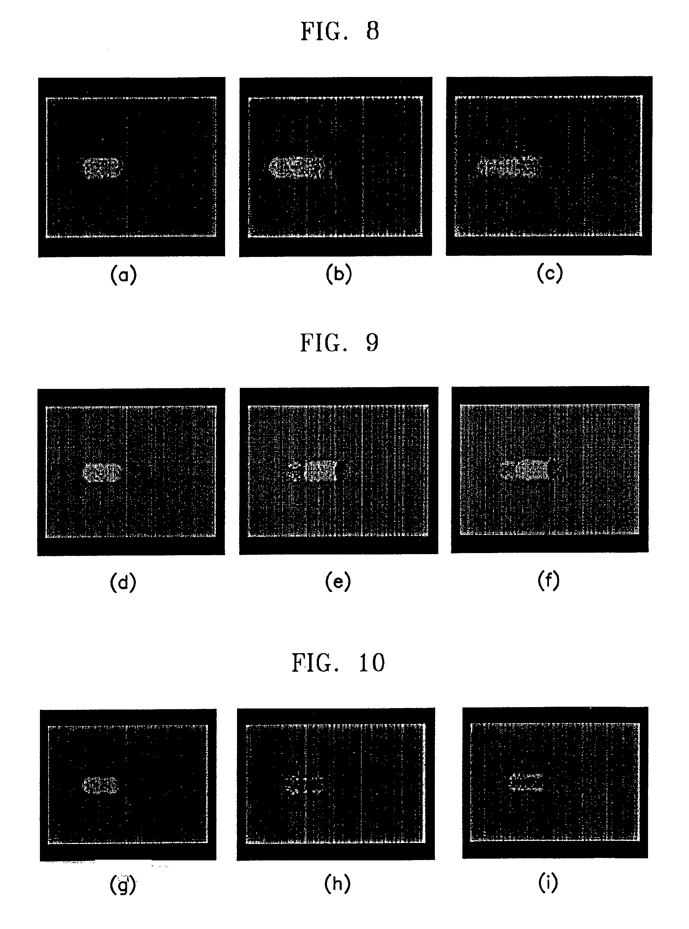

The simulation was performed under the conditions of a wavelength of 405nm, a numerical aperture NA of 0.65, and a linear velocity of 6m/s. To observe the shapes of marks, a first mark having a length of 8T was recorded and then a second mark having a length of 8T was recorded so as to overlap 4T of the first mark. Figures 8 through 10 show the results of comparing marks when using a conventional recording waveform and marks when using a recording waveform according to an embodiment of the present invention. Figure 8(a) is a mark formed through simulation, (b) is a mark formed on the mark (a) by a recording waveform according to an embodiment of the present invention, (c) is a mark formed on the mark (a) by a recording waveform according to the prior art. Figure 9 (d) is a mark formed through simulation, (e) is a mark formed on the mark (d) by a recording waveform having an erase pattern according to an embodiment of the present invention, and (f) is a mark formed on the mark (d) by a recording waveform having a DC erase pattern according to the prior art. Figure 10 (g) is a mark formed through simulation, (h) represents the mark (g) after it has been erased by the erase pattern according to an embodiment of the present invention, and (i) represents the mark (g) after it has been erased by the DC erase pattern according to the prior art.

Table 2 shows the parameters of a thin film used for simulation for thermal analysis.

**[Table 2]**

| Material | A=405nm | | C(J/cm3k) | K(W/cmK) |
|---|---|---|---|---|
| | n | k | | |
| ZnS-SiO2 | 2.300 | 0.000 | 2.055 | 0.0058 |
| Sb-Te eutectic (crystal) | 1.650 | 3.150 | 1.285 | 0.0060 |
| Sb-Te eutectic (amorphous) | 2.900 | 2.950 | 1.285 | 0.0060 |
| Ag alloy | 0.170 | 2.070 | 2.450 | 0.2000 |

Referring to the simulation results shown in Figures 8 through 10, it can be seen that a trailing edge of the mark (b) formed by the recording waveform having the erase pattern according to the present invention is similar in shape to the mark formed through the simulation than the trailing edge of the mark (c) formed by the recording waveform having the DC erase pattern according to the prior art. In Figure 9, it can be seen that the shape of leading edge of the mark formed by the erase pattern according to an embodiment of the present invention is better than that of the leading edge of the mark according to the prior art. From the simulation results, it could be ascertained that the shape of a mark according to embodiments of the present invention is improved by using a recording waveform having an erase pattern composed of an erase multi-pulse compared to the shape of a conventional mark. The shape, width, and power level of the erase multi-pulse can be controlled to further reduce the distortion of the shape of the mark.

To experimentally verify the effects of preferred embodiments of the present invention, parameters necessary for obtaining recording waveforms as shown in FIGS. 4 and 5, i.e., lasting time and power level, were obtained from 4.7GB DVD-RAM and 4.7GB DVD-RW discs using a DVD estimator having a wavelength of 650nm and a NA of 0.60. Next, repeated recording/reproducing characteristics were compared with recording/reproducing characteristics obtained by an existing method.

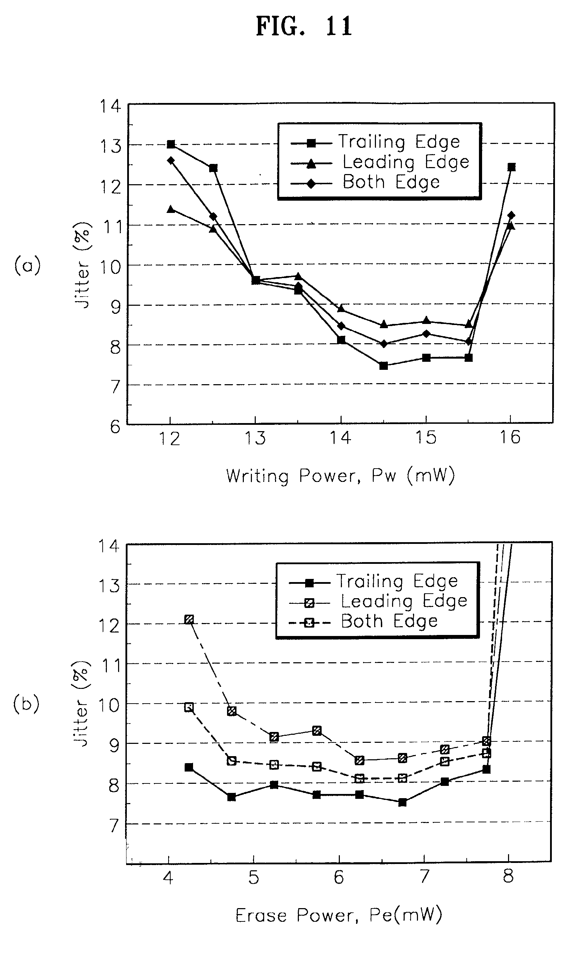

Figures 11 through 15 are graphs showing the characteristics of a DVD-RAM. Figures 11 through 13 show recording characteristic data according to time changes of power and Tsfp when erasing a mark from the DVD-RAM using an existing DC erase pattern. In Figures 11 through 13, power conditions used for testing the DC erasing process are Pw=14.5mW, Pb1=6.0m Pb2=4.5mW, and Pb3=3.2mW.

Figure 11 (a) and (b) show jitter characteristics according to the writing power Pw and an erase power Pe with respect to the leading edge, trailing edge, and both edges of a mark when erasing the mark using the existing DC erase pattern.

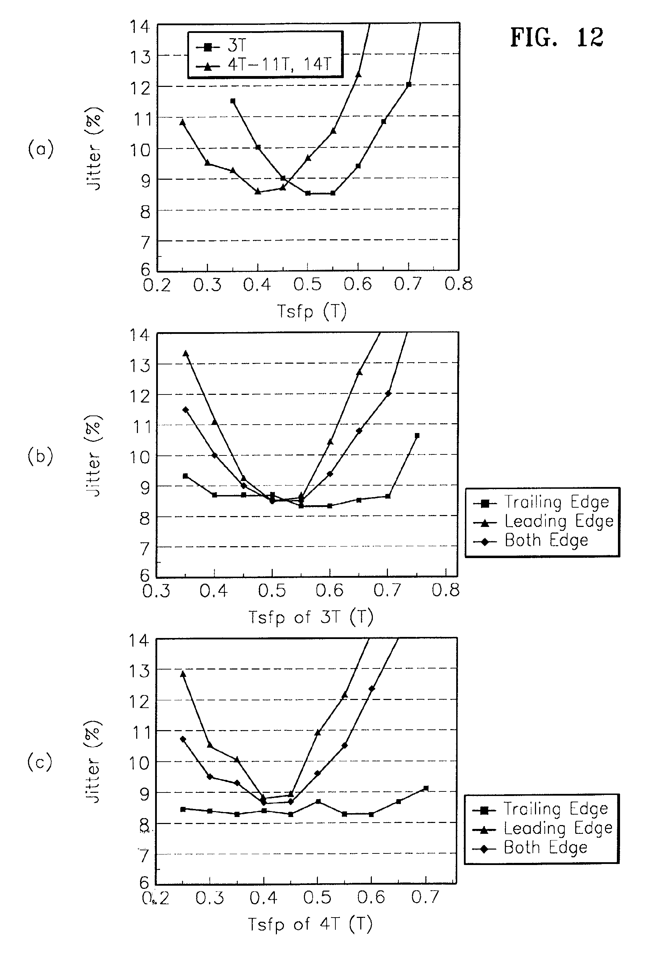

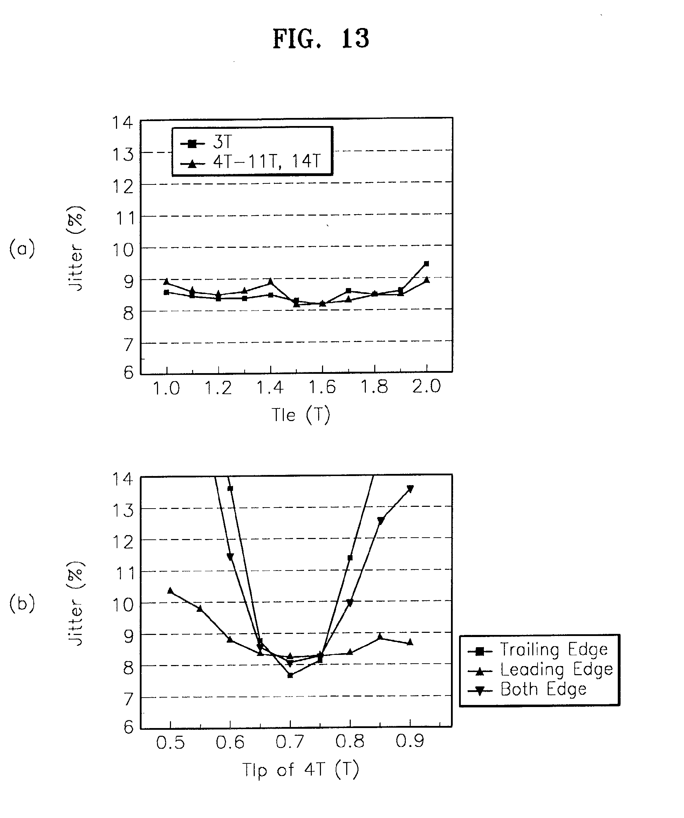

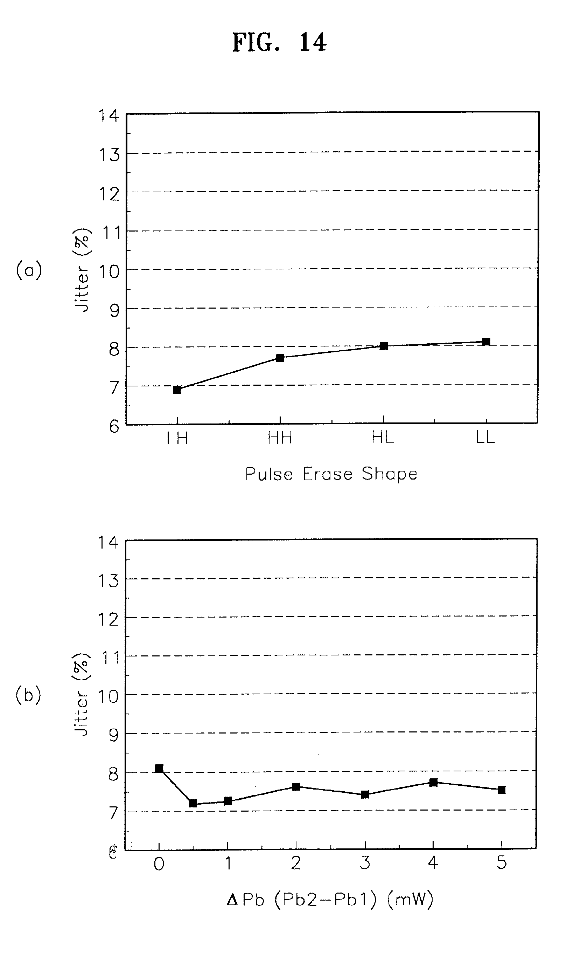

Figures 12 and 13 show results measured when erasing a mark using an existing DC erase pattern. Referring to FIGURE 12 (a), (b), and (c) and FIGURE 14 (a) and (b), when Tsfp is 0.5T and 0.4T, respectively, with respect to DC erase patterns of NRZI data having lengths of above 3T and 4T, the jitter characteristics corresponding to the DC erase patterns are the most excellent. When Tlp is 0.7T, the jitter characteristics are good, and the value of Tle is out of relation to the jitter characteristics.

A mark was formed using the recording waveform having the previously described four types of erase pattern based on the obtained parameters and then the characteristics of the mark were measured. The measured results are as follows.

Figures 14 shows jitter characteristics of the four types of erase patterns shown in Figure 6. Referring to Figure 14 (a), it can be seen that of the four types, LH is the most excellent. When measuring recording characteristics according to the method of embodiments of the present invention as shown in Figure 14, power conditions of Pw=14.5mW, Pb2=7.0mW, Pb1=5.0mW, and Pc=3.2mW were obtained. Here, ΔPb (Pb2-Pb1)=2.0mW. Powers P_{b1} and P_{b2} have the following relationship with a recording condition Pe: Pc≤Pb1≤Pe, Pe≤Pb2<Pw. Here, if P_{b1} is too much lower than Pe, a recording mark is not completely erased. If P_{b2} is too much higher than Pe, another recording mark is created when erasing the recording mark, which results in the degradation of a reproduction signal. Thus, it is preferable that P_{b1} is greater than 0.5*Pe with respect to Pe and P_{b2} is smaller than 1.5*Pe with respect to Pe.

Figure 14 (b) shows jitter characteristics with respect to the difference ΔPb (Pb2-Pb1) between the high level and the low level of an erase multi-pulse when a mark is erased using an erase pattern composed of the erase multi-pulse. It can be seen that the jitter characteristics are hardly changed up to 5mW.

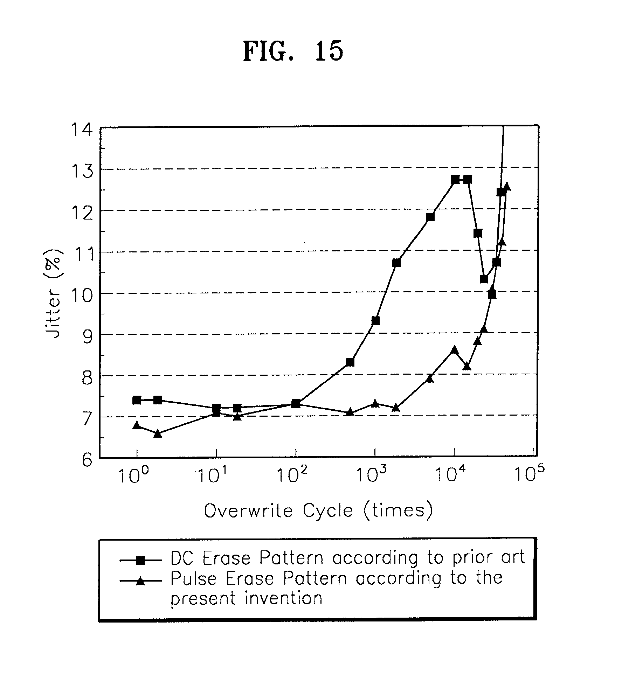

Figure 15 shows jitter characteristics when repeatedly recording and reproducing marks using a recording pulse having an erase pattern according to an embodiment of the present invention. Referring to Figure 15, since the marks are erased using an erase multi-pulse, repeated recording characteristics of the mark are good.

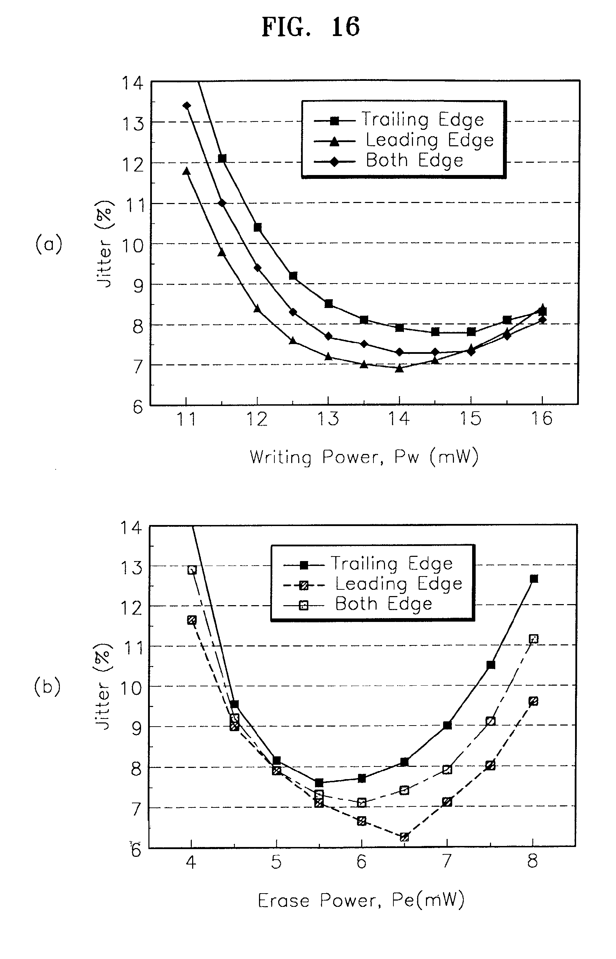

Figures 16 through 20 are graphs showing the characteristics of DVD-RW.

Figures 16 through 18 show recording characteristic data according to time changes of power and Tsfp when erasing a mark using an existing DC erase pattern from a DVD-RW disc. In FIGS. 16 through 18, it can be seen that power conditions used as test data for the DC erasing process are Pw=14.0mW, Pe=6.0mW, are Pc=0.5mW.

Figures 16(a) and 16(b) show jitter characteristics according to the writing power Pw and erase power Pe with respect to the leading edge, trailing edge, and both edges of a mark when erasing the mark using an existing DC erase pattern.

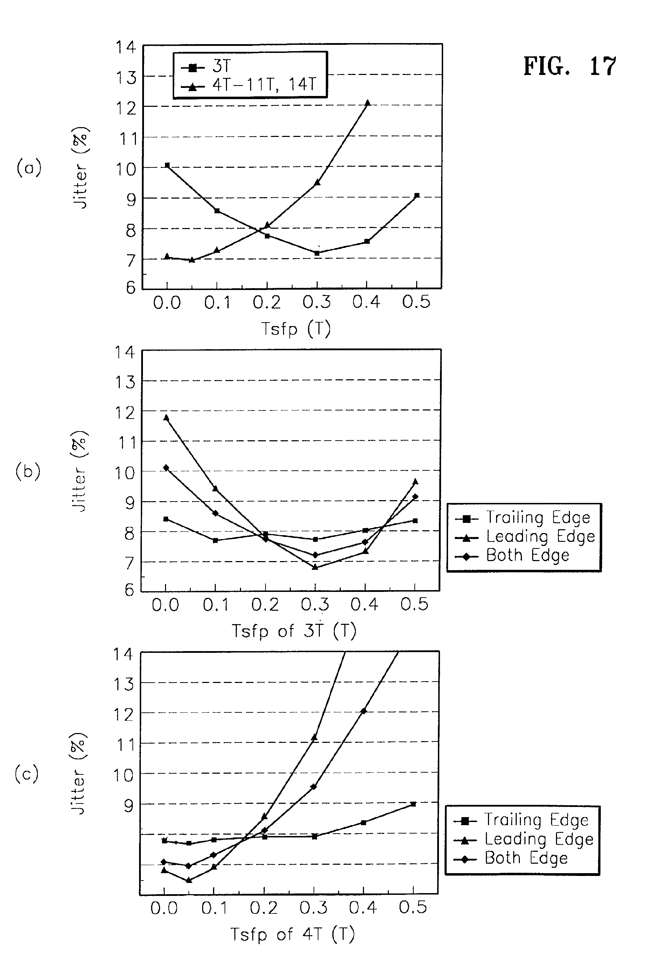

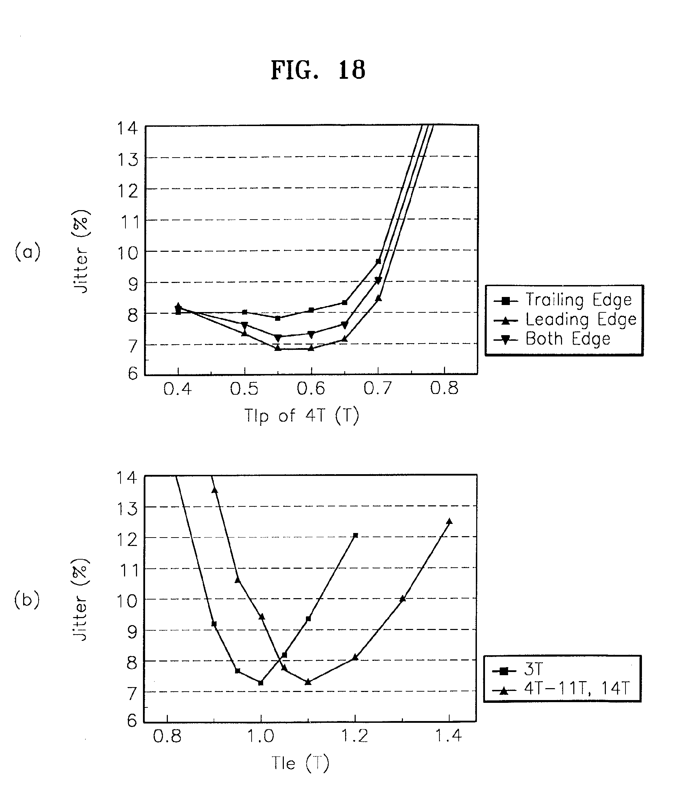

Figures 17 and 18 show results measured when erasing a mark using an existing DC erase pattern. Referring to FIGS. 17 and 18, it is preferable that Ttop is 1.2T and 1.45T with respect to marks having lengths of above 3T and 4T, respectively. It is preferable that Tlp, which is the last pulse constituting a recording pattern, is good at 0.55T and Tle is good at 1.0T and 1.1T.

A mark was formed using a recording waveform having the previously-described four types of erase patterns based on the obtained parameters and then the reproducing characteristics of the mark were measured. The measured results are as follows.

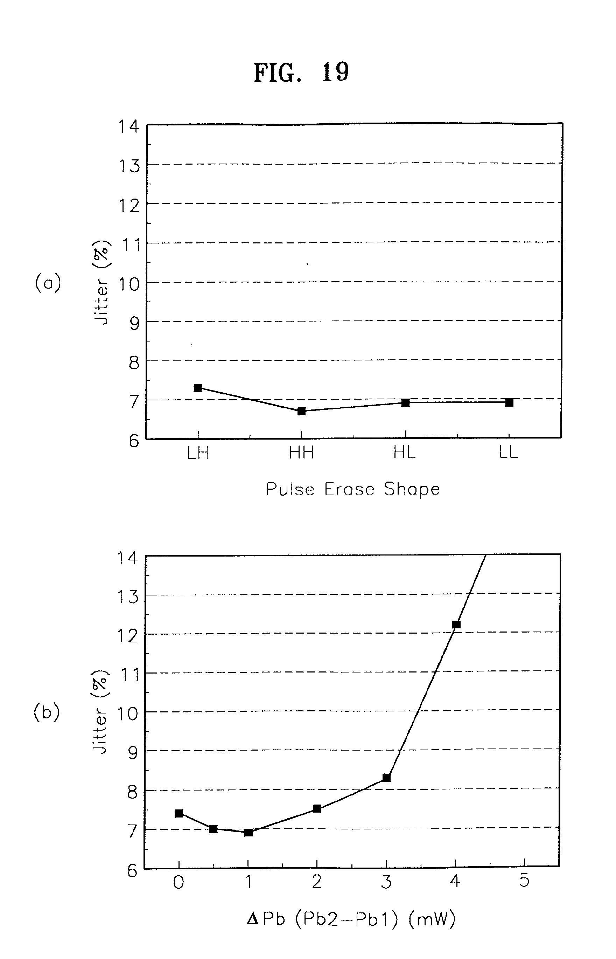

Figure 19 shows jitter characteristics of the four types of erase patterns shown in FIGURE 6. Referring to Figure 19, it can be seen that, of the four types, HH is the most excellent. When measuring recording characteristics according to an embodiment of the method of the present invention shown in Figure 19, power conditions of Pw=14.0mW, P_{b2}=6.5mW, P_{b1}=5.5mW, and Pc=0.5mW were obtained. Here, the difference between P_{b1} and P_{b2} is 1.0mW, i.e., ΔPb (P_{b2}-P_{b1}) =1.0mW. Powers P_{b1} and P_{b2} have the following relationship with a recording condition Pe when erasing a mark with a DC erase pattern: Pc≤P_{b1}≤Pe, Pe≤P_{b2}≤Pw. If P_{b1} is too much lower than Pe, the recording mark is not completely erased. If P_{b2} is too much higher than Pe, another recording mark is created when erasing the recording mark, which results in the degradation of a reproduction signal. Thus, it is preferable that P_{b1} is greater than 0.7*Pe with respect to Pe and P_{b2} is smaller than 1.3*Pe with respect to Pe.

Jitter characteristics can be obtained with respect to a difference ΔPb (Pb2-Pb1) between the high level and the low level of an erase multi-pulse when erasing the mark using an erase pattern composed of the erase multi-pulse according to the present invention. Since the jitter characteristics were sharply degraded above 3mW, a power of 1mW was selected as the recording/reproducing condition.

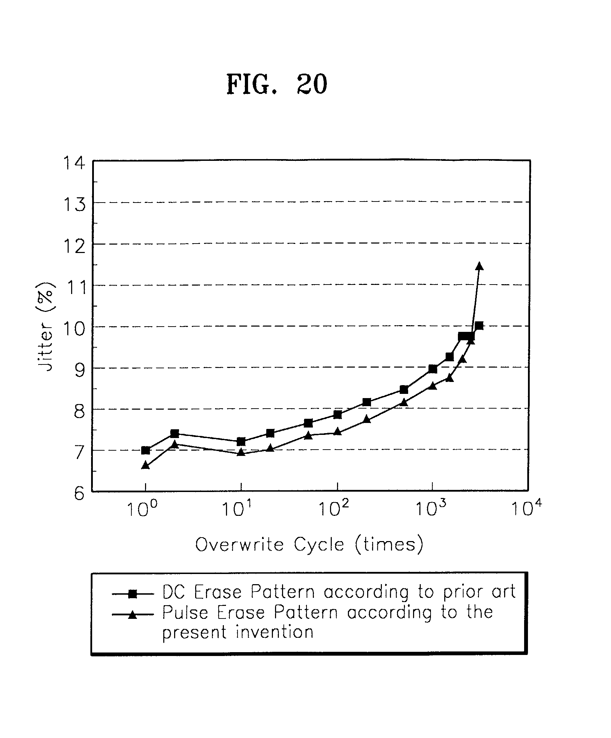

Figure 20 shows jitter characteristics obtained when repeatedly recording/reproducing a mark using a recording pulse having an erase pattern according to an embodiment of the present invention. Referring to Figure 20, it can be seen that since the mark is erased using the erase multi-pulse, the repeated recording characteristics of the mark are good. However, when the recording of the mark is repeated more than 2000 times, jitter characteristics are sharply degraded. Thus, it is advantageous to use a pulse erase method according to embodiments of the present invention when the mark is repeatedly recorded 1000 times, which is guaranteed to happen in a DVD-RW disc.

The above experiments used the EFM+ modulation method of the DVD format. In a case where other modulation methods generally used for stably recording a recording mark, e.g., RLL(1,7), D(8-15), Dual modulation, and the like, are adopted, the same results can also be obtained.

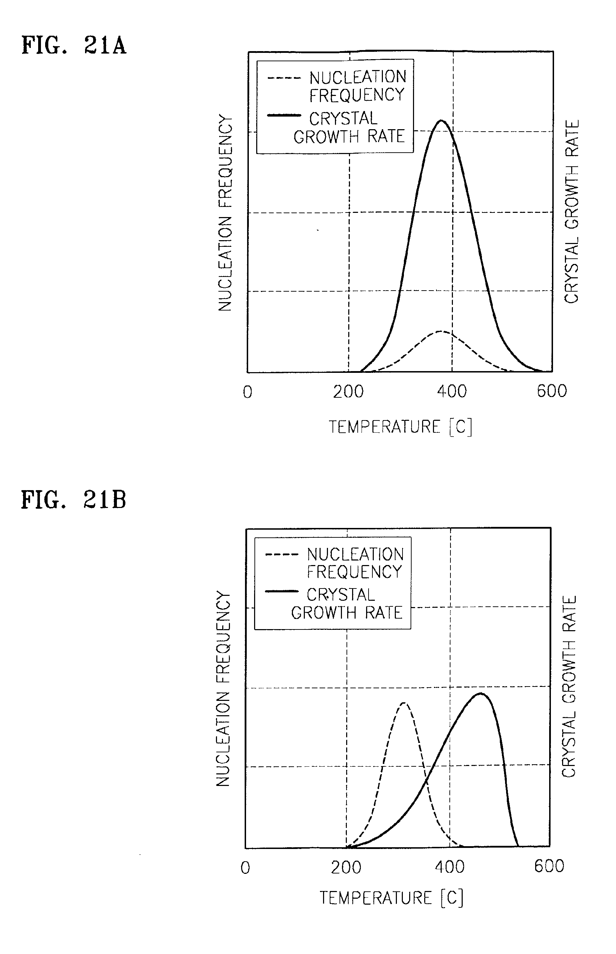

Figures 21A and 21B are graphs showing nucleation frequency and crystal growth rate according to temperatures of an AgInSbTe recording layer and a GeSbTe recording layer, respectively. As shown in Figures 4A through 7, in embodiments of the present invention, the erase power P_{b1} of the erase multi-pulse is greater than the erase power Pe and the erase power P_{b2} is smaller than the erase power Pe. In other words, the erase powers are controlled according to the characteristics of the recording layers. Also, information about the erase powers P_{b1} and P_{b2} is recorded on an optical recording medium and a drive reads information about the erase powers P_{b1} and P_{b2}. Thus, information about the erase powers P_{b1} and P_{b2} can be used as reference information for generating erase pulses. In the case of an optical recording medium on which the erase power P_{b1} or P_{b2} is not recorded, information about the erase powers P_{b1} and P_{b2} can be input from the outside and used as reference information for generating erase pulses.

Referring to Figure 21A, temperatures of crystal growth rate and nucleation frequency are equal in the AgInSbTe recording layer which is mainly used in DVD-RW. The temperature of a portion of the erase region in which erasing is ended becomes higher than the temperature of a portion of the erase region in which erasing starts due to thermal accumulation when erasing a mark with DC erase power. As a result, the quality of the reproduction signal may be degraded. However, in preferred embodiments of the present invention, it is possible to set pulse erase powers P_{b2} and P_{b1} where crystal growth is maximum. Here, the temperatures of the portion of the erase region where erasing starts and the portion of the erase region where erasing ends can be maintained to be almost identical. Thus, the recording mark is uniformly erased, which reduces noise so as to improve the quality of the reproduction signal.

Referring to Figure 2B, in the GeSbTe recording layer which is mainly used in DVD-RAM, the temperature of crystal growth rate is higher than the temperature of nucleation frequency. Thus, after nucleation is achieved by a pulse erase, crystal growth rate becomes higher when an existing mark is overwritten by Pe having a high temperature and high level P_{b2}. As a result, the erasing (crystallization) is not performed well. Thus, the characteristics of the leading and trailing edges of the recording mark are improved when recording the recording mark by the pulse erase method of embodiments of the present invention. Also, the recording mark is uniformly erased, which reduces noise so as to improve the quality of the reproduction signal.

A recording method according to a preferred embodiment of the present invention will be described based on the above-described structure.

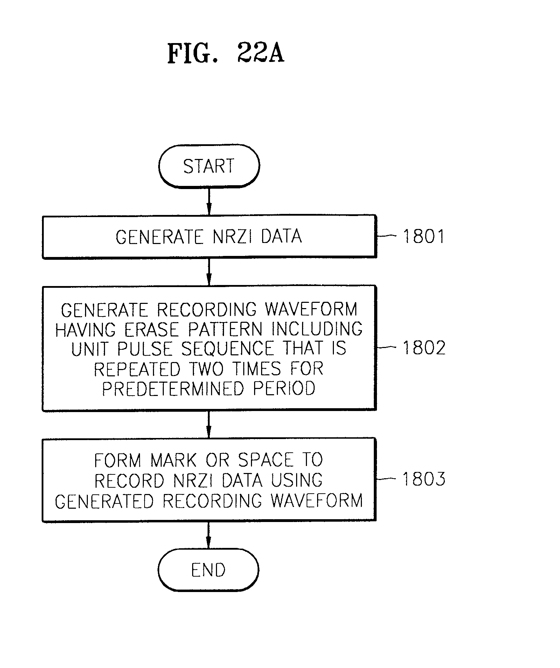

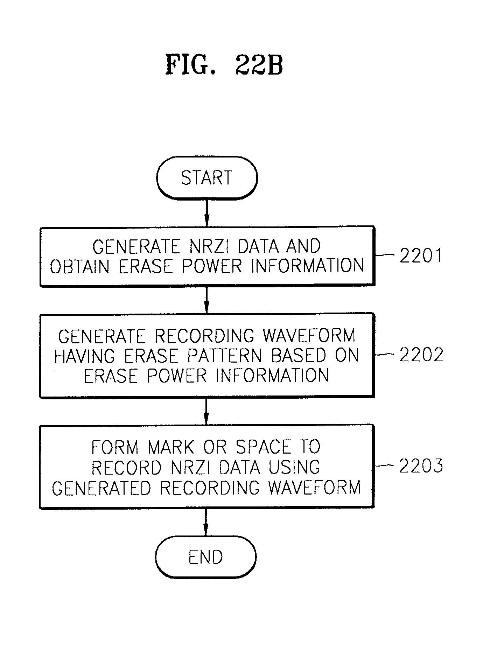

Figures 22A and 22B are flowcharts explaining a recording method according to a preferred embodiment of the present invention. Referring to Figure 22A, a recording apparatus receives data from the outside, modulates it, and generates NRZI data in step 1801. In step 1802, a recording waveform having an erase pattern containing an erase multi-pulse is generated. A mark or space is formed on the disc 200 using the generated recording waveform in step 1803.

Referring to Figure 22B, the recording apparatus receives data from the outside, modulates it, generates NRZI data, and obtains information about erase powers P_{b1} and P_{b2} in step 2201. In step 2202, a recording waveform having an erase pattern is generated based on information about the erase powers P_{b1} and P_{b2}. A mark or space is formed on the disc 200 using the generated recording waveform in step 2203.

As described above, in a method and apparatus for recording data according to preferred embodiments of the present invention, a recording waveform can prevent the shape of a mark from being distorted due to thermal interference and thermal accumulation between adjacent marks when recording the marks and improve the shape of the mark. As a result, the recording/reproducing characteristics of the mark can be improved.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment (5). The invention extends to any novel one, or any novel combination, of the features disclosed in this specification (including any accompanying claims, abstract and drawings), or to any novel one, or any novel combination, of the steps of any method or process so disclosed.

## Claims

1. A method of recording data on an optical recording medium, the method comprising:
(b) generating a recording waveform having an erase pattern including a predetermined pulse having a high level which is higher than an erase power level and having a low level which is lower than the erase power level.

2. The method of claim 1, wherein in step (b), the mark and the space are recorded according to a run length limited scheme.

3. The method of claim 1, wherein in step (b), the mark is recorded using a first level of predetermined NRZI and the space is recorded using a second level of the predetermined NRZI data.

4. A method of recording data on a recording medium, the method comprising:
(a) generating digital data whose channel is modulated;
(b) generating a recording waveform having an erase pattern including a predetermined pulse having a high level which is higher than an erase power level and having a low level which is lower than the erase power level; and
(c) forming marks according to a first level data of the digital data and forming spaces according to a second level data of the digital data using the generated recording waveform on the level information.

5. The method of claim 4, wherein step (a) further comprises reading level information of an erase pulse recorded on the optical recording medium, and in step (b), the erase pattern included in the generated recording waveform is formed by an erase pulse generated based on the level information.

6. The method of claim 5, wherein in step (a), the level information of the erase pulse is input from a user.

7. The method of claim 4, wherein step (a) comprises:
(a1) generating digital data whose channel is modulated;
(a2) reading the level information of the erase pulse recorded on the optical recording medium;
(a3) performing recording and erasing tests to obtain predetermined test data in a test area of the optical recording medium at predetermined value intervals within a predetermined range based on the level information; and
(a4) selecting optimum conditions of the test conditions based on the results of the tests, and in step (b), forming an erase pattern included in the recording waveform by using the erase pulse generated based on level information selected using the optimum conditions.

8. The method of any one of claims 4-7, wherein steps (a), (b) , and (c) are performed based on a (2, 10) run length limited scheme.

9. The method of any one of claims 4-7, wherein steps (a), (b), and (c) are performed based on a (1,7) run length limited scheme.

10. The method of any one of claims 1-3, wherein the power level of a first pulse of the erase pattern is a low level of the erase pattern and the power level of a last pulse of the erase pattern is a high level.

11. The method of any one of claims 4-9, wherein the power level of a first pulse of the erase pattern is a low level of the erase pattern and the power level of a last pulse of the erase pattern is a high level.

12. The method of any one of claims 1-3, wherein the power level of a first pulse of the erase pattern is a high level of the erase pattern and the power level of a last pulse of the erase pattern is a high level.

13. The method of any one of claims 4-9, wherein the power level of a first pulse of the erase pattern is a high level of the erase pattern and the power level of a last pulse of the erase pattern is a high level.

14. The method of any one of claims 1-3, wherein the power level of a first pulse of the erase pattern is a low level of the erase pattern and the power level of a last pulse of the erase pattern is a low level.

15. The method of any one of claims 4-9, wherein the power level of a first pulse of the erase pattern is a low level of the erase pattern and the power level of a last pulse of the erase pattern is a low level.

16. The method of any one of claims 1-3, wherein the power level of a first pulse of the erase pattern is a high level of the erase pattern and the power level of a last pulse of the erase pattern is a low level.

17. The method of any one of claims 4-9, wherein the power level of a first pulse of the erase pattern is a high level of the erase pattern and the power level of a last pulse of the erase pattern is a low level.

18. The method of any one of claims 1-3, wherein a ratio of the time for which a high level of a multi-pulse lasts to the time for which a low level of the multi-pulse lass is 1:1.

19. The method of any one of claims 4-9, wherein a ratio of the time for which a high level of a multi-pulse lasts to the time for which a low level of the multi-pulse lass is 1:1.

20. The method of claim 18, wherein the time for which the high level lasts is 1/2 of a clock cycle.

21. The method of any one of claims 1-3, wherein a ratio of the time for which the high level of the multi-pulse lasts to the time for which the low level of the multi-pulse lasts is m:n.

22. The method of any one of claims 4-9, wherein a ratio of the time for which the high level of the multi-pulse lasts to the time for which the low level of the multi-pulse lasts is m:n.

23. The method of any one of claims 1-3, wherein in step (a), a mark is formed using a first level of predetermined NRZI data and in step (b), and a space is formed using a second level of the NRZI data.

24. The method of any one of claims 4-9, wherein in step (a), a mark is formed using a first level of predetermined NRZI data and in step (b), and a space is formed using a second level of the NRZI data.

25. The method of claim 24, wherein a recording waveform comprises cooling pulses and the erase pattern comprises a portion of the cooling pulses.

26. The method of claim 25, wherein if an ending point of the cooling pulse is smaller or greater than 0.5T from a trailing edge of the NRZI signal, the time for which the first pulse constituting the erase pattern lasts is increased to more than 0.5T.

27. The method of claim 26, wherein a unit pulse constituting the erase pattern has a high level and a low level which are controlled according to the time for which the first pulse constituting the recording waveform lasts.

28. The method of any one of claims 1-3, wherein the recording pattern comprises a multi-pulse.

29. The method of any one of claims 4-9, wherein the recording pattern comprises a multi-pulse.

30. The method of claim 29, wherein the recording pattern has at least two power levels.

31. An apparatus for recording data on an optical recording medium (200), the apparatus comprising:
a recording waveform generator (2) for generating a recording waveform having an erase pattern including a multi-pulse; and
a pickup unit (1) for radiating light onto the optical recording medium (200) according to the generated recording waveform to form a mark or a space.

32. The apparatus of claim 31, further comprising a power information management unit (4) for reading pulse level information of the erase pattern recorded on the optical recording medium (200) and providing it to the recording waveform generator (2),
wherein the recording waveform generator (2)generates the recording waveform having the erase pattern including the multi-pulse based on the level information of the erase pattern.

33. The apparatus of claim 32, wherein the power information management unit (4) receives the pulse level information of the erase pattern from a user and provides it to the recording waveform generator (2).

34. The apparatus of claim 33, wherein the power information management unit (4) performs recording and erasing testes for predetermined test data in a test area of the optical recording medium (200) at predetermined value intervals within a predetermined range based on the level information of the erase pulse and selects optimum conditions of the test conditions based on the results of the tests, and provides the conditions to the recording waveform generator (2).

35. The apparatus of any one of claims 31-34, further comprising a channel modulator (3) for modulating a channel of data provided from the outside to generate NRZI data and outputting NRZI data to the recording waveform generator (2).

36. The apparatus of any one of claims 31-35, wherein the pickup unit (1) comprises:
a motor (11) for rotating the optical recording medium (200);
an optical head (13) for radiating light onto the optical recording medium (200) or receiving laser light reflected from the optical recording medium (200);
a servo circuit (12) for servo-controlling the motor (11) and the optical head (13); and
a laser driver (14) for driving a laser installed on the optical head (13).
